(19) Europäisches Patentamt / European Patent Office / Office européen des brevets

(11) **EP 2 108 918 B1**

(12) **EUROPEAN PATENT SPECIFICATION**

(45) Date of publication and mention
of the grant of the patent:
**12.12.2018 Bulletin 2018/50**

(51) Int Cl.:
**G01B 9/02** (2006.01)

(21) Application number: **09157375.8**

(22) Date of filing: **06.04.2009**

(54) **Laser interferometer, measurement method and measurement program**

Laserinterferometer, Messverfahren und Messprogramm

Interféromètre laser, procédé de mesure et programme de mesure

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **07.04.2008 JP 2008099095**

(43) Date of publication of application:
**14.10.2009 Bulletin 2009/42**

(73) Proprietor: **Mitutoyo Corporation
Kawasaki-shi, Kanagawa 213-8533 (JP)**

(72) Inventor: **Oozeki, Hidekazu
Ibaraki 305-0854 (JP)**

(74) Representative: **Gill Jennings & Every LLP
The Broadgate Tower
20 Primrose Street
London EC2A 2ES (GB)**

(56) References cited:
**US-A- 4 886 363    US-B1- 6 396 069**

- **WANG XUBAO: "The beam characteristic of
Nd:YAG frequency doubling in a KTP crystal by
the resonant external ring cavity" 28 January
2005 (2005-01-28), SPIE, PO BOX 10
BELLINGHAM WA 98227-0010 USA,
PROCEEDINGS VOL. 5646 , XP040197587 * the
whole document ***

## Description

Field of the Invention

The present invention relates to a laser interferometer, measurement method and measurement program for measuring a length based on laser light interference.

Description of the Related Art

A continuous-wave oscillation, 532-nm range solid laser uses a Nd:YAG crystal or the like as a gain medium, which is pumped with a semiconductor laser. The wavelength of such the solid laser is utilized as the standard for lengths. An actual length measurement using a wavelength of the laser light requires the laser light to oscillate at a single frequency, that is, in a single longitudinal mode.

Further, the use of the laser light wavelength for length measurement requires higher frequency stability of the laser light in order to reduce uncertainty of the length measurement. In an iodine-stabilized laser using an iodine molecular absorption line spectrometry, the oscillation frequency can be controlled at the center of a saturated absorption signal to produce a laser light with high frequency stability (see, for example, Patent Document 1: JP 2001-274495A).

Such the iodine-stabilized laser includes two types: a modulated light source that provides a modulated outgoing light; and a non-modulated light source that provides a non-modulated outgoing light.

The use of the modulated light source in laser interference length measurement causes a modulation signal to be superimposed on an interfered signal to increase the uncertainty of the length measurement as a problem. On the other hand, the non-modulated light source requires an external modulation system with an optical element such as an AOM (Acousto-Optic Modulator) and an EOM (Electro-Optic Modulator) and accordingly results in a complicated device and an increased production cost.

Therefore, the present invention has an object to provide a laser interferometer, measurement method and measurement program capable of suppressing the production cost of the laser light source and eliminating the influence by the modulation in laser interference length measurement.

US-A-6396069 discloses a laser topographer using interferometry in which the data digitizer can be driven with a clock derived from a reference channel. The clock is a multiple of the reference channel oscillation, e.g. eight times the reference signal frequency.

US-A-4886363 discloses a frequency modulated absolute distance measurement interferometer in which a digitizing sampling period is fast enough to satisfy the Nyquist criterion for the highest operational frequency of the interferometer.

"The beam characteristic of Nd:YAG frequency doubling in a KTP crystal by the resonant external ring cavity", by W.Xubao et al, Proceedings of SPIE Vol. 5646 (2005), discloses frequency doubling techniques for producing a shortwave laser beam with fine focus.

BRIEF SUMMARY OF THE INVENTION

The objects of the invention are achieved by realising the features of the independent claims 1, 5 and 9. The dependent claims further develop the idea of the present invention.

The present invention provides a laser interferometer for measuring a length based on laser light interference, comprising:

a laser source operative to produce a laser light modulated with a modulation signal of a first frequency, the modulation signal being a sine wave; and
an interferometer unit operative to apply said laser light from said laser source to a measurement target to produce a measured light containing length measurement information and operative to receive said measured light at a photoreceptor to create an electric signal containing length measurement information,
wherein the laser interferometer comprises a sampling unit operative to sample said electric signal in sync with a timing signal of a second frequency produced on the basis of said modulation signal of said first frequency, characterized in that said second frequency is 1/n said first frequency wherein n is a positive integer.

The present invention also provides a measurement method for measuring a length based on laser light interference, comprising:

producing a laser light modulated with a modulation signal of a first frequency, the modulation signal being a sine wave; and

applying said produced laser light to a measurement target to produce a measured light containing length measurement information and receiving said measured light at a photoreceptor to create an electric signal containing length measurement information,

wherein the method comprises sampling said electric signal in sync with a timing signal of a second frequency produced on the basis of said modulation signal of said first frequency,

characterized in that said second frequency is 1/n said first frequency where n is a positive integer.

The present invention further provides a measurement program for measuring a length based on laser light interference, comprising the computer-executable steps of:

producing a laser light modulated with a modulation signal of a first frequency, the modulation signal being a sine wave; and

applying said produced laser light to a measurement target to produce a measured light containing length measurement information and receiving said measured light at a photoreceptor to create an electric signal containing length measurement information,

wherein the program comprises the computer-executable step of sampling said electric signal in sync with a timing signal of a second frequency produced on the basis of said modulation signal of said first frequency, characterized in that said second frequency is 1/n said first frequency where n is a positive integer.

Fig. 1 is a brief block diagram of a laser interferometer according to an embodiment of the present invention.

Fig. 2 is a brief diagram of a laser source 10 shown in Fig. 1.

Fig. 3 shows a light output signal Sg1 detected at the time of control in the laser interferometer according to the embodiment of the present invention, and a third order differential signal Sg5.

Fig. 4 is a flowchart showing a process of sampling in the laser interferometer according to the embodiment and to an example useful for understanding the present invention.

Fig. 5 is a waveform diagram of a third and a fourth electric signal $\varphi A'$, $\varphi B'$ when a sampling frequency fs is set at ten times the modulation frequency fm (fs = 10·fm).

Fig. 6 shows a calculated result of the position P (= $\Delta D2/\lambda i$: normalized by the wavelength $\lambda i$) of the movable mirror 30 over time.

Fig. 7 shows an FFT-analyzed result when a sampling frequency fs is set at ten times the modulation frequency fm (fs = 10·fm).

Fig. 8 shows an FFT-analyzed result when a sampling frequency fs is set at one time the modulation frequency fm (fs = 1·fm).

Fig. 9 illustrates a variation in frequency component of the modulation frequency fm contained in the displacement P (= $\Delta D2/\lambda i$) when a sampling frequency fs is set at 0.1-50 times the modulation frequency fm.

Fig. 10 is a waveform diagram of the frequency component of the modulation frequency fm contained in the displacement P, and a timing signal Sg8 when a sampling frequency fs is set at one time the modulation frequency fm (fs = 1·fm).

Fig. 11 is a waveform diagram of the frequency component of the modulation frequency fm contained in the displacement P, and a timing signal Sg8 when a sampling frequency fs is set at double the modulation frequency fm (fs = 2·fm).

Fig. 12 shows a variation in frequency component of the modulation frequency fm contained in the displacement P (= $\Delta D2/\lambda i$) associated with a variation in phase difference between the frequency component of the modulation frequency fm contained in the displacement P (= $\Delta D2/\lambda i$) and the timing signal Sg8.

DETAILED DESCRIPTION OF THE INVENTION

A laser interferometer according to an embodiment of the present invention, and examples useful for understanding the present invention will now be described with reference to the drawings.

(Configuration of Laser Interferometer according to Present Embodiment)

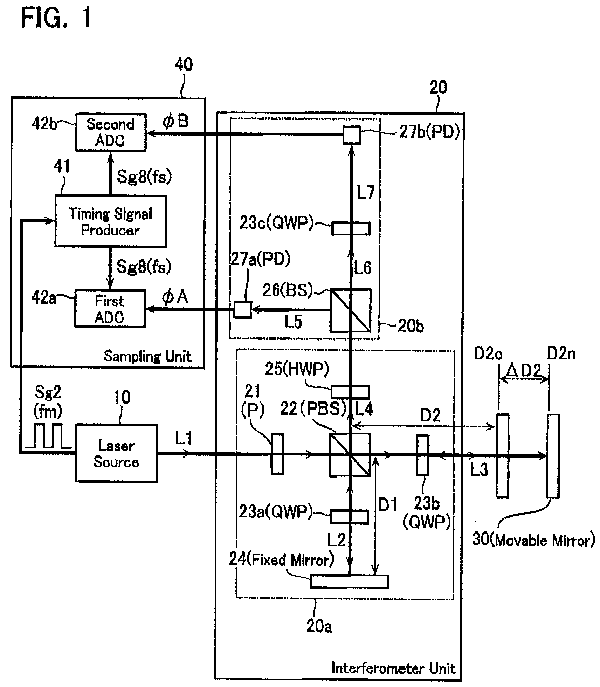

Referring first to Fig. 1, a configuration of the laser interferometer according to the embodiment of the present invention is described. Fig. 1 is a brief block diagram of the laser interferometer according to the embodiment of the present invention. The laser interferometer according to the present embodiment takes the so-called Michelson type configuration. As shown in Fig. 1, the laser interferometer according to the present embodiment comprises a laser source 10, an interferometer unit 20, amovable mirror (measurement target) 30, and a sampling unit 40.

The laser source 10 has a function of producing a laser light L1 modulated with a modulation signal of a modulation frequency (first frequency) fm. The interferometer unit 20 applies the laser light L1 from the laser source 10 to the movable mirror (measurement target) 30 to produce a laser light L4 (measured light) containing length measurement information. The interferometer unit 20 receives the measured light L4 at a photoreceptor 20b to create a first and a second electric signal $\phi$A, $\phi$B containing length measurement information. The movable mirror 30 reflects a laser light L3 incoming from the interferometer unit 20. The sampling unit 40 samples the first and second electric signals $\phi$A, $\phi$B in sync with a timing signal of a sampling frequency produced on the basis of the modulation signal of the modulation frequency fm.

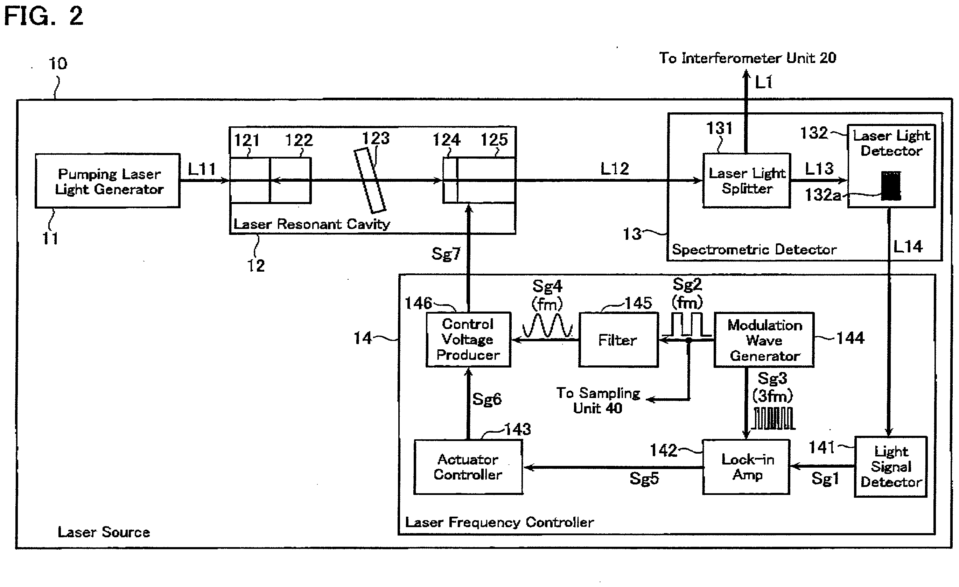

Referring next to Fig. 2, a configuration of the laser source 10 is described. Fig. 2 is a brief diagram of the laser source 10.

The laser source 10 includes a pumping laser light generator 11, a laser resonant cavity 12, a spectrometric detector 13, and a laser frequency controller 14.

The pumping laser light generator 11 releases an 808-nm wavelength pumping light L11 on receipt of a certain current.

The laser resonant cavity 12 contains a Nd:YVO4 crystal 121, a KTP crystal 122, an etalon 123, a reflecting mirror 124, and an actuator 125 sequentially arranged on the optical path of the pumping light L11.

The Nd: YVO4 crystal 121 is a crystal for diode-laser-pumped solid laser. TheNd:YVO4 crystal 121 emits a 1064-nm wavelength light by stimulated radiation on application of the pumping light L11 to excite Nd atoms. The Nd:YVO4 crystal 121 has a coating on the side of the pumping laser light generator 11 to reflect the 1064-nm wavelength light.

The KTP crystal 122 is a non-linear optical crystal. The KTP crystal 122 converts part of the 1064-nm wavelength light by stimulated radiation into a secondary harmonic, or a 532-nm light.

The etalon 123 includes high-reflection filters arranged face to face. The etalon 123, serves as a frequency filter.

The reflecting mirror 124 has a coating that reflects the 1064-nm wavelength light therefrom and transmits the 532-nm wavelength light therethrough. As in the above configuration, the Nd: YVO4 crystal 121 and the reflecting mirror 124 configure a resonant cavity only for the 1064-nm wavelength light.

The actuator 125 includes a piezoelectric element. The actuator 125 deforms (expands and contracts) in response to the voltage applied thereto. In a word, with the deformation, the actuator 125 shifts the reflecting mirror 124 relative to the Nd:YVO4 crystal 121 to change the resonant cavity length. Under the control of the resonant cavity length, the laser resonant cavity 12 releases a 532-nm laser light L12.

The spectrometric detector 13 includes a laser light splitter 131, and a laser light detector 132. The laser light splitter 131 splits the laser light L12 to produce the laser light L1 and a laser light L13. The laser light splitter 131 leads the laser light L1 to the interferometer unit 20 and the laser light L13 to the laser light detector 132. The laser light L1 is available in length measurement use and the laser light L13 in reference use for frequency stabilization. The laser light detector 132 contains an iodine cell 132a. The laser light detector 132 is configured to transmit the laser light L13 through the iodine cell 132a. When the laser light L13 transmits through the iodine cell 132a, lights of oscillation frequencies within a certain range are absorbed in iodine. On the other hand, at a specific frequency (resonation frequency) of the oscillation frequencies within the certain range, the absorption of light by iodine decreases due to saturation. Therefore, the laser light L13 transmits through the iodine cell 132a (laser light detector 132) and turns to a detection light L14 for controlling the laser frequency.

The laser frequency controller 14 includes a light signal detector 141, a lock-in amp 142, an actuator controller 143, a modulation wave generator 144, a filter 145, and a control voltage producer 146.

The light signal detector 141 detects the detection light L14 from the laser light detector 132. The light signal detector 141 produces a light output signal Sg1 based on the detection light L14. The light signal detector 141 provides the light output signal Sg1 to the lock-in amp 142.

The lock-in amp 142 demodulates the input of the light output signal Sg1 with a modulation signal Sg3 of a modulation frequency 3fm to produce a third order differential signal Sg5. The lock-in amp 142 provides the produced third order differential signal Sg5 to the actuator controller 143.

The actuator controller 143 may comprise a personal computer. The actuator controller 143 contains a storage unit that stores various programs, and a control unit that reads the program for execution. The actuator controller 143 controls the oscillation frequency of the laser light L1 in accordance with the various programs stored. The actuator controller 143 produces an actuator control signal Sg6 based on the input of the third order differential signal Sg5. The actuator control signal Sg6 is fed to the control voltage producer 146.

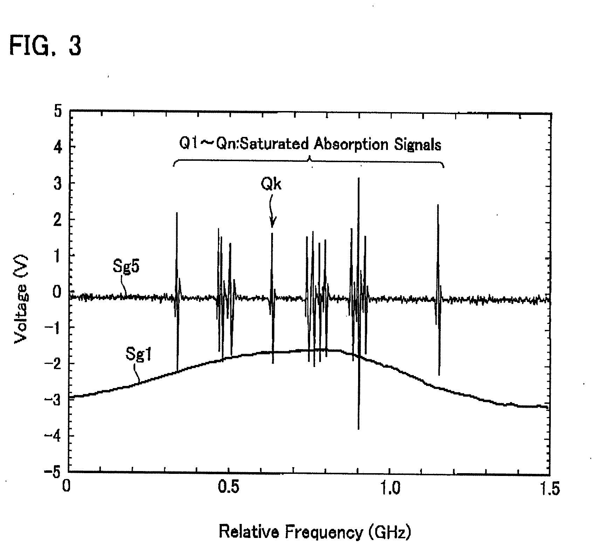

Fig. 3 shows the light output signal Sg1 and the third order differential signal Sg5. As shown in Fig. 3, in the third order differential signal Sg5 within a certain frequency region, plural saturated absorption lines Q1-Qn (n is a natural number) each having a peak and a valley are observed.

The modulation wave generator 144 provides a square-wave modulation signal Sg2 of the modulation frequency fm to the filter 145 and the sampling unit 40. The modulation wave generator 144 provides a square-wave modulation signal Sg3 of the modulation frequency 3fm to the lock-in amp 142.

The filter 145 produces a sine-wave modulation signal Sg4 of the modulation frequency fm based on the given square-wave modulation signal Sg2. The filter 145 provides the sine-wave modulation signal Sg4 to the control voltage producer 146.

The control voltage producer 146 produces a certain control voltage based on the actuator control signal Sg6. The control voltage producer 146modulates the produced control voltage with the modulation signal Sg4 to produce a modulated control signal Sg7. The control voltage producer 146 applies the modulated control signal Sg7 to the actuator 125. As a result, the actuator 125 can adjust the resonant cavity length between the Nd:YVO4 crystal 121 and the reflecting mirror 124 in the laser resonant cavity 12 to a certain length, thereby setting the laser light L1 at a certain frequency.

Referring again to Fig. 1 subsequently, a configuration of the interferometer unit 20 is described.

The interferometer unit 20 includes a light splitter/synthesizer 20a, and a photoreceptor 20b. The light splitter/synthesizer 20a splits the laser light L1 incoming from the laser source 10 into a laser light L3 (measurement light) applied to the movable mirror (measurement target) 30 and a laser light (reference light) L2 applied to the fixedmirror (reference surface) 24, and synthesizes the laser light L2 reflected at the fixedmirror 24 and the laser light L3 reflected at the movable mirror (measurement target) 30 into a laser light L4. The photoreceptor 20b receives the laser light L4 and produces the first and second electric signals $\phi$A, $\phi$B based on the laser light L4.

The light splitter/synthesizer 20a contains a polarizing plate (P) 21, a polarizing beam splitter (PBS) 22, a first and a second $\lambda$/4 plate (QWP) 23a, 23b, a fixed mirror 24, and a $\lambda$/2 plate 25.

The photoreceptor 20b contains a beam splitter (BS) 26, a third $\lambda$/4 plate (QWP) 23c, and a first and a second photodetector (PD) 27a, 27b.

In the interferometer unit 20, the laser light L1 from the laser source 10 is first applied via the polarizing plate 21 to the polarizing beam splitter 22. The laser light L1 is then split at the polarizing beam splitter 22 into the laser light L2 and the laser light L3.

The laser light L2 travels through the first $\lambda$/4 plate 23a and reaches the fixed mirror 24. After reflected therefrom, it passes through the first $\lambda$/4 plate 23a again and irradiates the polarizing beam splitter 22. On the other hand, the laser light L3 travels through the second $\lambda$/4 plate 23b and reaches the movable mirror 30. After reflected therefrom, it passes through the second $\lambda$/4 plate 23b again and irradiates the polarizing beam splitter 22.

Subsequently, the polarizing beam splitter 22 synthesizes the laser light L2 reflected at the fixed mirror 24 and the laser light L3 reflected at the movable mirror 30 into the laser light L4. The laser light L4 then passes through the $\lambda$/2 plate 25 and irradiates the beam splitter 26.

The laser light L4 is split at the beam splitter 26 into a laser light L5 and a laser light L6. The laser light L5 is detected at the first photodetector 27a. The first photodetector 27a provides the first electric signal $\phi$A based on the laser light L5 to the sampling unit 40. On the other hand, the laser light L6 travels through the third $\lambda$/4 plate 23c and turns to a laser light L7 that is 90-degree phase-shifted from the laser light L5. The laser light L7 is detected at the second photodetector 27b. The second photodetector 27b provides the second electric signal $\phi$B based on the laser light L7 to the sampling unit 40.

Referring next to Fig. 1, a configuration of the movable mirror 30 is described. The movable mirror 30 is configured to reflect the laser light L3 as shown in Fig. 1. The movable mirror 30 is also configured movable apart from or close to the polarizing beam splitter 22.

Referring to Fig. 1 subsequently, a configuration of the sampling unit 40 is described. The sampling unit 40 includes a timing signal producer 41, and a first and a second A/D converter 42a, 42b.

The timing signal producer 41 produces a timing signal Sg8 based on the modulation signal Sg2 of the modulation frequency fm from the laser light unit 10. If , by means of example, the timing signal producer 41 decides that the setting frequency fo is equal to or higher than the modulation frequency fm (fo $\geq$ fm), it produces a timing signal Sg8 having a sampling frequency fs equal to the modulation signal Sg2 (modulation frequency fm) multiplied by a (a: a positive integer) (fs = fm·a). This example is not claimed. If the timing signal producer 41 decides that the setting frequency fo is lower than the modulation frequency fm (fo < fm), it produces a timing signal Sg8 having a sampling frequency fs equal to the modulation signal Sg2 (modulation frequency fm) divided by b (b: a positive integer) (fs = fm/b). The timing signal producer 41 provides the timing signal Sg8 to the first and second A/D converters 42a, 42b.

The timing signal producer 41 sets the sampling frequency fs at 1/n the modulation frequency fm (n: a positive integer) . As an example which is not claimed, the timing signal producer 41 sets the sampling frequency fs at double the modulation frequency fm. In this example, the timing signal producer 41 sets the phase of the timing signal Sg8 (sampling frequency fs) to minimize the frequency component of the modulation frequency fm contained in the length measurement result.

The timing signal producer 41 may comprise a personal computer. The timing signal producer 41 contains a storage unit that stores various programs, and a control unit that reads the program for execution. The timing signal producer 41 executes the above-described operation in accordance with the various programs stored.

The first and second A/D converters 42a, 42b sample the first and second electric signals $\phi$A, $\phi$B in sync with the timing signal Sg8 of the sampling frequency fs.

(Method for Calculating Displacement of Movable Mirror 30)

Referring next to Fig. 1, a method for calculating a displacement $\Delta$D2 of the movable mirror 30 is described. The displacement $\Delta$D2 means the distance traveled by the movable mirror 30 in a certain time. The displacement $\Delta$D2 means the difference in the optical path length from the polarizing beam splitter 22 to the movable mirror 30 while it varies from the initial position "D2o" to the current position "D2n".

The laser light L4 repeats light and darkness at a period (period: 266 nm) of 1/2 the wavelength of the laser light L1 over the optical path difference (D2 - D1) resulted from subtraction of a first optical path length D1 from a second optical path length D2. The optical path length from the polarizing beam splitter 22 to the fixed mirror 24 is herein referred to as the first optical path length D1 and the optical path length from the polarizing beam splitter 22 to the movable mirror 30 as the second optical path length D2.

On the other hand, the first electric signal $\phi$A is the signal based on the laser light L5 and the second electric signal $\phi$B is the signal based on the laser light L7 that is 90-degree phase-shifted from the laser light L5 as described above. Therefore, the first and second electric signals $\phi$A, $\phi$B can be represented by the following (Equation 1) and (Equation 2) over the optical path difference (D2 - D1) .

$$\phi A = A\sin\theta + V_a \qquad \text{(Equation 1)}$$

$$\phi B = B\cos\theta + V_b \qquad \text{(Equation 2)}$$

For the first signal $\phi$A of the above (Equation 1), the amplitude A is normalized and the offset Va is removed to represent the first signal $\phi$A as a third signal $\phi$A' as shown in the following (Equation 3). Similarly, for the second signal $\phi$B of (Equation 2), the amplitude B is normalized and the offset Vb is removed to represent the second signal $\phi$B as a fourth signal $\phi$B' as shown in the following (Equation 4).

$$\phi A' = \sin\theta \qquad \text{(Equation 3)}$$

$$\phi B' = \cos\theta \qquad \text{(Equation 4)}$$

A variation in length $\lambda$i (= 266 nm) in the optical path difference (D2 - D1) in the laser interferometer in the embodiment causes a variation of 2n in the phase $\theta$ of the third and fourth signals $\phi$A' $\phi$B' represented by (Equation 3) and (Equation 4) . The laser interferometer derives the phase $\theta$ from the third and fourth signals $\phi$A' $\phi$B' and counts the times N of periodic variations in accordance with the length $\lambda$i. The laser interferometer calculates the displacement of the optical path difference (D2 - D1) using (Equation 5) and (Equation 6) shown below.

$$D2 - D1 = N \bullet \lambda i + \Delta\lambda i \text{ (N is an integer)} \qquad \text{(Equation 5)}$$

$$\Delta\lambda i = \lambda i \times \frac{\theta}{2\pi} \qquad \text{(Equation 6)}$$

Here, the phase of D2-D1 is in the range of 0-$\lambda$i since $\theta$=0-2$\pi$.

The displacement $\Delta$D2 of the movable mirror 30 from the initial position D2o to the current position D2n can be represented as in (Equation 7) shown below. In (Equation 7), "D1o" represents the initial position of the fixed mirror 24 and "D1n" represents the current position of the fixed mirror 24.

$$\Delta D2 = D2n - D2o = (D2n - D1n) - (D2o - D1o) \qquad \text{(Equation 7)}$$

In (Equation 7), the first optical path length D1 is constant (D1n = D1o). Accordingly, the displacement ΔD2 of the movable mirror 30 can be derived by calculating the values of (Equation 5) and (Equation 6) successively.

(Process of Sampling in Laser Interferometer according to Present Embodiment)

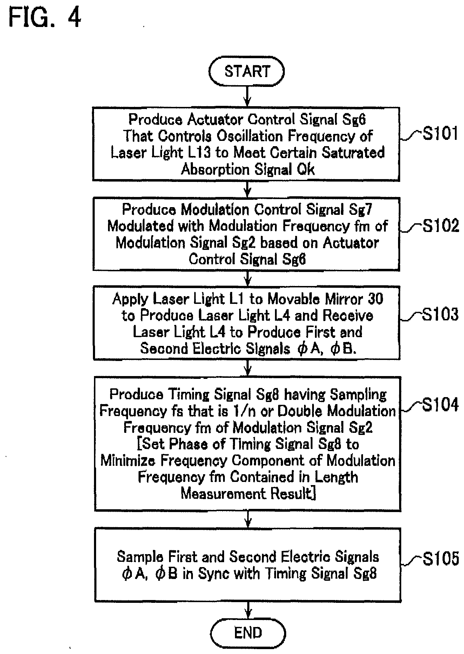

Referring next to Fig. 4, a process of sampling in the laser interferometer according to the present embodiment is described. Fig. 4 is a flowchart showing the process of sampling in the laser interferometer according to the present embodiment.

First, as shown in Fig. 4, in the laser source 10 (the laser frequency controller 14), the actuator controller 143 produces the actuator control signal Sg6 that controls the oscillation frequency of the laser light L13 to meet a certain saturated absorption line Qk (step S101).

Subsequently, the control voltage producer 146 produces the modulation control signal Sg7 modulated with the modulation frequency fm of the modulation signal Sg2 based on the actuator control signal Sg6 (step S102).

In a word, in the processes at the step S101 and the step S102, the actuator 125 is used to control the resonant cavity length of the resonant cavity 12. As a result, the laser source 10 produces the laser light L1 modulated with the modulation signal Sg4 of the modulation frequency fm.

Then, the interferometer unit 20 applies the laser light L1 to the movable mirror 30 to produce the laser light (measurement light) L4 containing length measurement information and receives the laser Light L4 at the photoreceptor 20b to produce the first and second electric signals $\phi$A, $\phi$B containing length measurement information (step S104).

Subsequently, in the sampling unit 40, the timing signal producer 41 produces the timing signal Sg8 having the sampling frequency fs that is 1/n (n; a positive integer) or double the modulation frequency fm of the modulation signal Sg2 (step S104) .

In the step S104, the timing signal producer 41 sets the phase of the timing signal Sg8 (sampling frequency fs) to minimize the component of the modulation frequency fm contained in the length measurement result.

Subsequently, the first A/Dconverter 42a samples the first electric signal $\phi$A in sync with the timing signal Sg8 of the sampling frequency fs. Similarly, the second A/D converter 42b samples the second electric signal $\phi$B in sync with the timing signal Sg8 of the sampling frequency fs (step S105). Finally, the process of sampling in the laser interferometer comes to an end.

In a word, in the processes at the step S104 and the step S105, the sampling unit 40 samples the first and second electric signals $\phi$A, $\phi$B in sync with the timing signal Sg8 of the sampling frequency fs produced on the basis of the modulation signal Sg2 of the modulation frequency fm.

(Effect of Laser Interferometer according to Present Embodiment)

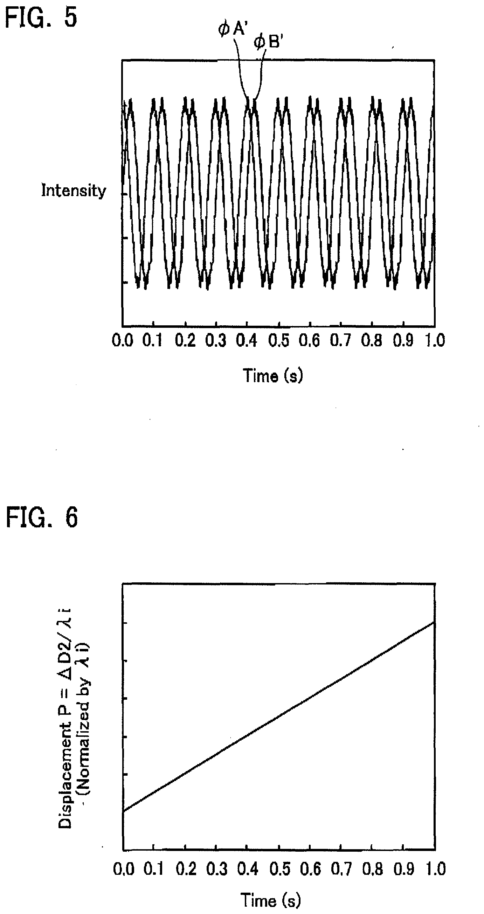

Referring next to Figs. 5-12, the effect of the laser interferometer according to the present embodiment is described, by comparison with examples useful for understanding the invention, which are not claimed.

A simulation was performed to obtain various signals with regard to the process of sampling in the laser interferometer. In the simulation, the movable mirror 30 was moved at a rate of 10·λi per second (λi = 266 nm) and the sampling frequency fs was set at ten times the modulation frequency fm. Under other simulation conditions, the modulation frequency fm of the modulation signal Sg2 was set at 1 kHz and the modulation width was set as corresponding to 1 % of the period of the laser interferometer. A white noise having the intensity corresponding to 5 % of λi was added as a noise component.

Fig. 5 shows a waveform diagram of a third and a fourth electric signal $\phi$A', $\phi$B' based on the first and second electric signals $\phi$A, $\phi$B obtained through the simulation under the above conditions. Fig. 6 shows a calculated result of the displacement P (= Δ02/λi: ΔD2 normalized by λi) of the movable mirror 30 over time obtained through the simulation under the above conditions. As shown in Figs. 5 and 6, the first and second electric signals $\phi$A, $\phi$B can be used to calculate the displacement of the movable mirror 30.

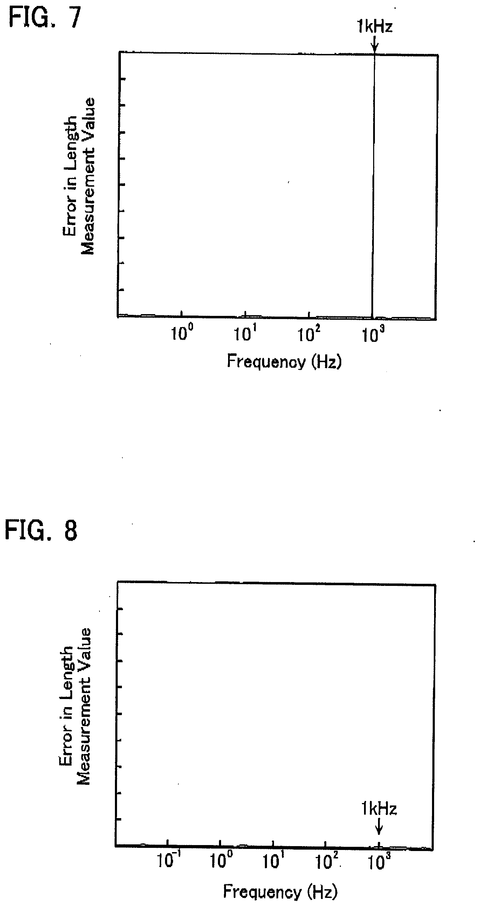

Fig. 7 shows a result from a Fast Fourier Transform (FFT) analysis over the displacement P of the movable mirror 30. As shown in Fig. 7, it can be found that the output result of the displacement from the laser interferometer includes a peak detected at 1 kHz that is the modulation frequency fm of the modulation signal Sg2. In a word, under the above setting condition, the influence by the modulation frequency fm can not be eliminated sufficiently.

Referring next to Fig. 8, an FFT analysis executed over the displacement P of the movable mirror 30 is described in the case where the sampling frequency fs is changed from the above condition in the simulation. Fig. 8 shows an FFT-analyzed result over the displacement output from the laser interferometer when the sampling frequency fs is changed to one time the modulation frequency fm from the above condition.

As shown in Fig. 8, it can be found that the peak at 1 kHz that is the frequency of the modulation frequency fm can be eliminated if the sampling frequency fs is set at one time the modulation frequency fm. This way of performing the sampling is in accordance with the invention.

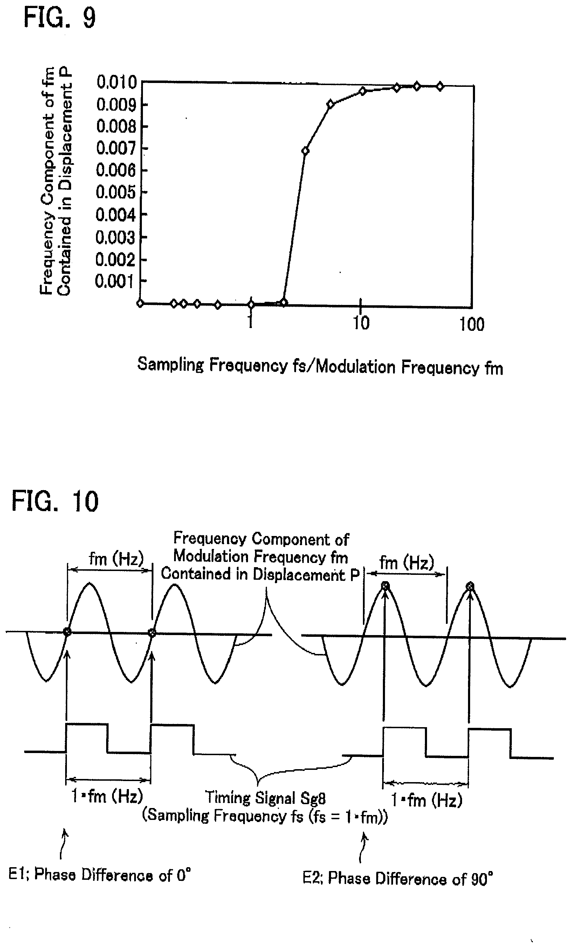

Referring to Fig. 9 subsequently, a description is given to a variation in the frequency component of the modulation frequency fm contained in the displacement P when the sampling frequency fs is set at 0.1-50 times the modulation frequency fm. In Fig. 9, the axis of abscissa is represented logarithmic. As shown in Fig. 9, it can be found that the frequency component of the modulation frequency fm contained in the displacement P becomes extremely small (almost 0) if the sampling frequency fs is set at 2 times or below the modulation frequency fm. In contrast, if the sampling frequency fs exceeds 2 times, the frequency component of the modulation signal increases up to the modulation width of 1 %.

Referring to Figs. 10-12 subsequently, a description is given to the effect on reduction in the frequency component of the modulation frequency fm contained in the displacement P associated with a variation in the phase difference between the frequency component of the modulation frequency fm contained in the displacement P and the timing signal Sg8 (sampling frequency fs).

Fig. 10 is a waveform diagram of the frequency component of the modulation frequency fm contained in the displacement P, and the timing signal Sg8, when the sampling frequency fs is set at one time the modulation frequency fm (fs = 1·fm) . As can be found from Fig. 10, if the timing signal Sg8 and the frequency component of the modulation frequency fm contained in the displacement P are set to have a phase difference of "0°" therebetween (Symbol: El), sampling is executed at the timing when the frequency component of the modulation frequency fm contained in the displacement P becomes "0". Therefore, the frequency component of the modulation frequency fm can not be detected. If the timing signal Sg8 and the frequency component of the modulation frequency fm contained in the displacement P are set to have a phase difference of "90°" therebetween (Symbol: E2), sampling is executed at the timing whenever the modulation signal Sg4 reaches the maximum. Therefore, the frequency component of the modulation frequency fm can not be detected.

Sampling is executed when the sampling frequency fs is set at 1/n the modulation frequency fm (n: a positive integer) . In this case, even if the timing signal Sg8 and the frequency component of the modulation frequency fm contained in the displacement P have a phase difference therebetween, sampling can be executed at the same phase. Therefore, the frequency component of the modulation frequency fm can not be detected.

In a word, in the present embodiment, the timing signal producer 41 sets the sampling frequency fs at 1/n the modulation frequency fm (n: a positive integer) to produce the timing signal Sg8. Therefore, the laser interferometer according to the present embodiment can eliminate the frequency component of the modulation frequency fm (the influence by the modulation) contained in the length measurement result.

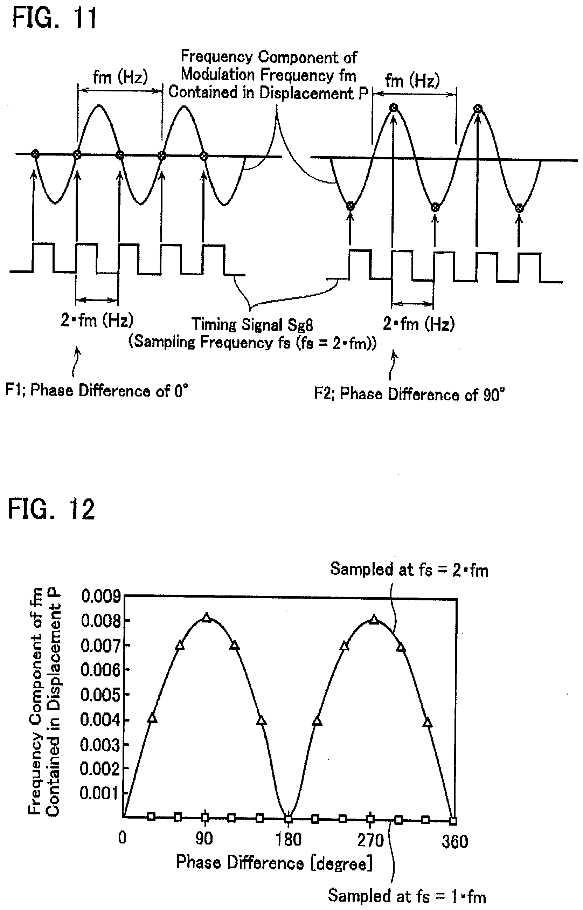

Fig. 11 corresponds to a case which is not claimed, and is a waveform diagram of the frequency component of the modulation frequency fm contained in the displacement P, and the timing signal Sg8 when the sampling frequency fs is set at double the modulation frequency fm (fs = 2·fm). As can be found from Fig. 11, if the timing signal Sg8 and the frequency component of the modulation frequency fm contained in the displacement P are set to have a phase difference of "0°" therebetween (Symbol: F1), sampling is executed at the timing when the intensity of the modulation signal Sg4 becomes "0". Therefore, the frequency component of the modulation frequency fm can not be detected. On the other hand, if the phase difference is set at "90°", sampling is executed at the points where the frequency component of the modulation frequency fm contained in the displacement P reaches the maximum and the minimum. Therefore, the frequency component of the modulation frequency fm can be detected with the maximum amplitude.

Fig. 12 shows a variation in frequency component of the modulation frequency fm contained in the displacement P associated with a variation in phase difference between the frequency component of the modulation frequency fm contained in the displacement P and the timing signal Sg8 (sampling frequency fs). Fig. 12 shows the cases of sampling executed when the sampling frequency fs is set at one time the modulation frequency fm (fs = 1·fm) and when the sampling frequency fs is set at double the modulation frequency fm (fs = 2·fm).

As can be found from Fig. 12, if the sampling frequency fs is set at one time the modulation frequency fm (fs = 1·fm), the frequency component of the modulation frequency fm becomes "0" regardless of the phase difference as described in Fig. 8. On the other hand, if the sampling frequency fs is set at double the modulation frequency fm (fs = 2·fm), the phase difference between the frequency component of the modulation frequency fm contained in the displacement P and the timing signal Sg8 periodically changes the frequency component of the modulation frequency fm such that the frequency component of the modulation frequency fm contained in the displacement P becomes "0" when the phase difference is 0° and 180°, as can be found.

The timing signal producer 41 sets the sampling frequency fs at double or 1/n the modulation frequency fm (n: a positive integer) to produce the timing signal Sg8. In the example useful for understanding the invention where sampling frequency fs is set at double the modulation frequency fm (fs = 2·fm), the phase of the timing signal Sg8 is set so as to minimize the frequency component of the modulation frequency fm contained in the displacement P.

A method for setting the phase of the timing signal Sg8 may comprise measuring the displacement ΔD2 of the movable mirror 30 first in accordance with the above procedure while keeping the movable mirror 30 in the fixed state. The displacement ΔD2 is herein observed to contain the frequency component of the modulation frequency fm as shown in Fig. 11. The timing signal producer 41 sets the phase of the timing signal Sg8 so as to minimize the above frequency component of the modulation frequency fm contained in the displacement P.

Therefore, in this example which is not claimed, even if the sampling frequency fs is set at double the modulation frequency fm (fs = 2·fm), the frequency component of the modulation frequency fm (the influence by the modulation) contained in the length measurement result can be eliminated by setting the phase difference of the timing signal Sg8 appropriately.

In the present embodiment, the sampling unit 40 executes sampling at a certain period to eliminate the frequency component of the modulation frequency fm (the influence by the modulation) as described above. Therefore, in the present embodiment, an expensive optical element such as an AOM and an EOM is not used and accordingly the production cost of the laser light source can be suppressed. Additionally, in the present embodiment, an optical element such as an AOM and an EOM is not used and accordingly the laser light source can not be complicated.

(Other Embodiments)

One embodiment associated with the laser interferometer has been described above though the present invention is not limited to the above embodiment but rather can be given various modifications, additions, replacements and so forth. The invention is defined in the claims. For example, the control of the oscillation frequency of the laser light L1 is not limited to one that uses the saturated absorption lines of iodine.

**Claims**

1. A laser interferometer for measuring a length based on laser light interference, comprising:

   a laser source (10) operative to produce a laser light modulated with a modulation signal of a first frequency, the modulation signal being a sine wave; and
   an interferometer unit (20) operative to apply said laser light from said laser source (10) to a measurement target (30) to produce a measured light containing length measurement information and operative to receive said measured light at a photoreceptor to create an electric signal containing length measurement information, wherein the laser interferometer comprises a sampling unit (40) operative to sample said electric signal in sync with a timing signal of a second frequency produced on the basis of said modulation signal of said first frequency, **characterized in that** said second frequency is 1/n said first frequency wherein n is a positive integer.

2. The laser interferometer according to claim 1 further comprising a filter operable to produce the modulation signal based on the timing signal.

3. The laser interferometer according to claim 1 or 2, wherein said laser source (10) is operable to adjust the central wavelength of said laser light to meet a certain saturated absorption line of iodine.

4. The laser interferometer according to claim 3, wherein said laser source (10) is operable to specify said saturated absorption line in accordance with a third order differential signal of an electric signal based on said laser light transmitted through said iodine.

5. A measurement method for measuring a length based on laser light interference, comprising:

   producing a laser light modulated with a modulation signal of a first frequency (S101, S102), the modulation signal being a sine wave; and
   applying said produced laser light to a measurement target to produce a measured light containing length measurement information and receiving said measured light at a photoreceptor to create an electric signal containing length measurement information (S103),
   the method comprises sampling said electric signal in sync with a timing signal of a second frequency produced on the basis of said modulation signal of said first frequency (S104, S105), **characterized in that** said second frequency is 1/n said first frequency where n is a positive integer.

6. The measurement method according to claim 5, further comprising producing the modulation signal based on the timing signal using a filter.

7. The measurement method according to claim 5 or claim 6, further comprising adjusting the central wavelength of said laser light to meet a certain saturated absorption line of iodine.

8. The measurement method according to claim 7, further comprising specifying said saturated absorption line in accordance with a third order differential signal of an electric signal based on said laser light transmitted through said iodine .

9. A measurement program for measuring a length based on laser light interference, comprising the computer-executable steps of:

producing a laser light modulated with a modulation signal of a first frequency (S101, S102), the modulation signal being a sine wave; and
applying said produced laser light to a measurement target to produce a measured light containing length measurement information and receiving said measured light at a photoreceptor to create an electric signal containing length measurement information (S103),
the program comprises the computer-executable step of sampling said electric signal in sync with a timing signal of a second frequency produced on the basis of said modulation signal of said first frequency (S104, S105),
**characterized in that** said second frequency is 1/n said first frequency where n is a positive integer.

10. The measurement program according to claim 9, further comprising the computer executable step of producing the modulation signal based on the timing signal using a filter.

11. The measurement program according to claim 9 or claim 10, further comprising the computer executable step of adjusting the central wavelength of said laser light to meet a certain saturated absorption line of iodine.

12. The measurement program of claim 11, further comprising the computer executable step of specifying said saturated absorption line in accordance with a third order differential signal of an electric signal based on said laser light transmitted through said iodine.

**Patentansprüche**

1. Ein Laserinterferometer zum Messen einer Länge basierend auf Laserlichtinterferenz, das Folgendes umfasst:
eine Laserquelle (10), die eingesetzt werden kann, um ein Laserlicht zu erzeugen, das mit einem Modulationssignal einer ersten Frequenz moduliert ist, wobei das Modulationssignal eine Sinuswelle ist; und

eine Interferometereinheit (20), die eingesetzt werden kann, um das genannte Laserlicht von der genannten Laserquelle (10) auf ein Messziel (30) anzuwenden, um ein gemessenes Licht zu erzeugen, das Längenmessinformation enthält, und eingesetzt werden kann, um das genannte gemessene Licht an einem Fotorezeptor zu empfangen, um ein elektrisches Signal zu erzeugen, das Längenmessinformationen enthält,
wobei das Laserinterferometer eine Abtasteinheit (40) umfasst, die eingesetzt werden kann, um das elektrische Signal synchron mit einem Zeitsignal einer zweiten Frequenz abzutasten, das auf der Basis des Modulationssignals der genannten ersten Frequenz erzeugt wird,
**dadurch gekennzeichnet, dass** die genannte zweite Frequenz 1 / n der genannten ersten Frequenz ist, wobei n eine positive ganze Zahl ist.

2. Das Laserinterferometer entsprechend Anspruch 1, das zudem einen Filter umfasst, der eingesetzt werden kann, um das Modulationssignal zu erzeugen, das auf dem Zeitsignal basiert.

3. Das Laserinterferometer entsprechend Anspruch 1 oder 2, wobei die genannte Laserquelle (10) eingesetzt werden kann, um die Zentralwellenlänge des genannten Laserlichts anzupassen, um auf eine bestimmte gesättigte Absorptionslinie von Jod aufzutreffen.

4. Das Laserinterferometer entsprechend Anspruch 3, wobei die genannte Laserquelle (10) eingesetzt werden kann, um die genannte gesättigte Absorptionslinie entsprechend eines Differentialsignals dritter Ordnung eines elektrischen Signals basierend auf dem durch das Jod übertragenen Laserlichts zu spezifizieren.

5. Ein Messverfahren zum Messen einer Länge basierend auf Laserlichtinterferenz, das Folgendes umfasst:
Erzeugen eines Laserlichts, das mit einem Modulationssignal einer ersten Frequenz (S101, S102) moduliert ist, wobei das Modulationssignal eine Sinuswelle ist; und

Anwenden des genannten erzeugten Laserlichts auf ein Messziel, um ein gemessenes Licht zu erzeugen, das Längenmessinformation enthält, und Empfangen des genannten gemessenen Lichts an einem Fotorezeptor, um ein elektrisches Signal zu erzeugen, das Längenmessinformationen (S103) enthält,

wobei das Verfahren das Abtasten des genannten elektrischen Signals synchron mit einem Zeitsignal einer zweiten Frequenz umfasst, das auf der Basis des genannten Modulationssignals der genannten ersten Frequenz (S104, S105) erzeugt wird,

**dadurch gekennzeichnet, dass** die genannte zweite Frequenz 1 / n der genannten ersten Frequenz ist, wobei n eine positive ganze Zahl ist.

6. Das Messverfahren entsprechend Anspruch 5, das zudem das Erzeugen des Modulationssignals basierend auf dem Zeitsignal unter Verwenden eines Filters umfasst.

7. Das Messverfahren entsprechend Anspruch 5 oder Anspruch 6, das zudem die Anpassung der Zentralwellenlänge des genannten Laserlichts umfasst, um auf eine bestimmte gesättigte Absorptionslinie von Jod aufzutreffen.

8. Das Messverfahren entsprechend Anspruch 7, das zudem das Spezifizieren der genannten gesättigten Absorptionslinie entsprechend eines Differentialsignals dritter Ordnung eines elektrischen Signals basierend auf dem durch das Jod übertragenen Laserlichts umfasst.

9. Ein Messprogramm zum Messen einer Länge basierend auf Laserlichtinterferenz, das die folgenden, auf einem Computer ausführbaren Schritte umfasst:

Erzeugen eines Laserlichts, das mit einem Modulationssignal einer ersten Frequenz (S101, S102) moduliert ist, wobei das Modulationssignal eine Sinuswelle ist; und

Anwenden des genannten erzeugten Laserlichts auf ein Messziel, um ein gemessenes Licht zu erzeugen, das Längenmessinformation enthält, und Empfangen des genannten gemessenen Lichts an einem Fotorezeptor, um ein elektrisches Signal zu erzeugen, das Längenmessinformationen (S103) enthält,

wobei das Programm den von einem Computer ausführbaren Schritt des Abtastens des genannten elektrischen Signals synchron mit einem Zeitsignal einer zweiten Frequenz umfasst, das auf der Basis des genannten Modulationssignals der genannten ersten Frequenz (S104, S105) erzeugt wird,

**dadurch gekennzeichnet, dass** die genannte zweite Frequenz 1 / n der genannten ersten Frequenz ist, wobei n eine positive ganze Zahl ist.

10. Das Messprogramm entsprechend Anspruch 9, das zudem den von einem Computer ausführbaren Schritt des Erzeugens des Modulationssignals basierend auf dem Zeitsignal unter Verwenden eines Filters umfasst.

11. Das Messprogramm entsprechend Anspruch 9 oder Anspruch 10, das zudem den von einem Computer ausführbaren Schritt der Anpassung der Zentralwellenlänge des genannten Laserlichts umfasst, um auf eine bestimmte gesättigte Absorptionslinie von Jod aufzutreffen.

12. Das Messprogramm entsprechend Anspruch 11, das zudem den von einem Computer ausführbaren Schritt des Spezifizierens der genannten gesättigten Absorptionslinie entsprechend eines Differentialsignals dritter Ordnung eines elektrischen Signals basierend auf dem durch das Jod übertragenen Laserlichts umfasst..

**Revendications**

1. Un interféromètre laser de mesure d'une longueur en se basant sur une interférence de lumière laser et qui se compose :

d'une source laser (10) qui opère de façon à produire une lumière laser modulée avec un signal de modulation qui a une première fréquence, ce signal de modulation se présentant sous la forme d'une onde sinusoïdale et d'un groupe interféromètre (20) qui opère de façon à appliquer ladite lumière laser depuis ladite source laser (10) sur une cible de mesure (30) de manière à produire une lumière mesurée qui contient des informations sur la mesure de la longueur et qui opère de façon à recevoir ladite lumière mesurée au niveau d'un photorécepteur afin de créer un signal électrique qui contient des informations de mesure de la longueur et cet interféromètre laser comporte une unité d'échantillonnage (40) qui prend un échantillon dudit signal électrique, qui se synchronise sur un signal de synchronisation qui a une deuxième fréquence et qui est produit sur la base dudit signal de modulation qui a ladite première fréquence et qui se **caractérise par le fait que** ladite seconde fréquence est égale à 1/n de ladite première fréquence, où n est un nombre entier positif.

2. L'interféromètre laser qui est décrit dans la revendication 1, si ce n'est qu'il comporte en outre un filtre qui a pour tâche de produire le signal de modulation basé sur le signal de synchronisation.

3. L'interféromètre laser qui est décrit dans la revendication 1 ou 2, si ce n'est que ladite source laser (10) a pour tâche d'ajuster la longueur d'onde centrale de ladite lumière laser de façon à respecter une certaine ligne d'absorption saturée de l'iode.

4. L'interféromètre laser qui est décrit dans la revendication 3, si ce n'est que ladite source laser (10) a pour tâche de permettre la spécification ladite ligne d'absorption saturée en conformité avec un signal différentiel du troisième ordre d'un signal électrique basé sur la ladite lumière laser transmise au travers de ladite iode.

5. Une méthode de mesure pour mesurer une longueur qui est basée sur une interférence de lumière laser et qui consiste à :

produire une lumière laser modulée par un signal de modulation d'une première fréquence (5101, 5102), ce signal de modulation étant une onde sinusoïdale, et
appliquer ladite lumière laser produite à une cible de mesure afin de produire une lumière mesurée qui contient des informations de mesure de longueur et à recevoir ladite lumière mesurée au niveau d'un photorécepteur, de manière à créer un signal électrique qui contient des informations de mesure de longueur (S103) ; et cette méthode se compose de l'échantillonnage dudit signal électrique qui est synchronisé avec in signal de synchronisation de deuxième fréquence produit sur la base dudit signal de modulation de ladite première fréquence (S104, S105) qui se **caractérise par le fait que** ladite seconde fréquence est égale à 1 / n de ladite première fréquence, où n est un nombre entier positif.

6. La méthode de mesure qui est décrite dans la revendication 5, si ce n'est qu'elle comporte en outre la production du signal de modulation basé sur le signal de synchronisation en faisant appel à un filtre.

7. La méthode de mesure qui est décrite dans la revendication 5 ou la revendication 6, si ce n'est qu'elle comporte en outre l'ajustement de la longueur d'onde centrale de ladite lumière laser de façon à respecter une ligne d'absorption saturée de l'iode.

8. La méthode de mesure qui est décrite dans la revendication 7, si ce n'est qu'elle comporte en outre la spécification de ladite ligne d'absorption saturée en conformité avec un signal différentiel du troisième ordre d'un signal électrique basé sur ladite lumière laser transmise au travers de ladite iode.

9. Un programme de mesure d'une longueur sur la base d'une interférence de lumière laser et composé des phases exécutables par ordinateur :

de production d'une lumière laser modulée avec un signal de modulation d'une première fréquence (S101, S102), ce signal de modulation étant une onde sinusoïdale, et
d'application de ladite lumière laser produite sur une cible de mesure afin de produire une lumière mesurée contenant des informations de mesure de longueur et recevant ladite lumière mesurée au nveau d'un photorécepteur afin de créer un signal électrique contenant des informations de mesure de longueur (S103), et
ce programme se compose de la phase exécutable par ordinateur de prise d'échantillon dudit signal électrique avec synchronisation par rapport à un signal de synchronisation d'une deuxième fréquence produite sur la base dudit signal de modulation de ladite première fréquence (S104, S105) **se caractérisant par le fait que** ladite seconde fréquence est égale à 1/n de ladite première fréquence, où n est un nombre entier positif.

10. Le programme de mesure qui est décrit dans la réclamation 9, si ce n'est qu'il comporte en outre une phase exécutable par ordinateur de production du signal de modulation sur la base du signal de synchronisation utilisant un filtre.

11. Le programme de mesure qui est décrit dans la réclamation 9 ou la réclamation 10, si ce n'est qu'il comporte en outre une phase exécutable par ordinateur d'ajustement de la longueur d'onde centrale de ladite lumière laser afin de respecter une certaine ligne d'absorption saturée de l'iode.

12. Le programme de mesure qui est décrit dans la réclamation 11, si c n'est qu'il comporte en outre une phase exécutable par ordinateur de spécification de ladite ligne d'absorption saturée en conformité avec un signal différentiel du troisième ordre d'un signal électrique basé sur ladite lumière laser transmise au travers de ladite iode.

# FIG. 1

FIG. 2

FIG. 3

# FIG. 4

```
                    ( START )
                        │
                        ▼
    ┌────────────────────────────────────┐
    │   Produce Actuator Control Signal Sg6 │
    │   That Controls Oscillation Frequency of │ ──S101
    │   Laser Light L13 to Meet Certain Saturated │
    │        Absorption Signal Qk          │
    └────────────────────────────────────┘
                        │
                        ▼
    ┌────────────────────────────────────┐
    │   Produce Modulation Control Signal Sg7 │
    │   Modulated with Modulation Frequency fm of │ ──S102
    │   Modulation Signal Sg2 based on Actuator │
    │        Control Signal Sg6            │
    └────────────────────────────────────┘
                        │
                        ▼
    ┌────────────────────────────────────┐
    │   Apply Laser Light L1 to Movable Mirror 30 │
    │   to Produce Laser Light L4 and Receive │ ──S103
    │   Laser Light L4 to Produce First and │
    │   Second Electric Signals φA, φB.   │
    └────────────────────────────────────┘
                        │
                        ▼
    ┌────────────────────────────────────┐
    │   Produce Timing Signal Sg8 having Sampling │
    │ Frequency fs that is 1/n or Double Modulation │ ──S104
    │   Frequency fm of Modulation Signal Sg2 │
    │   [Set Phase of Timing Signal Sg8 to │
    │   Minimize Frequency Component of Modulation │
    │   Frequency fm Contained in Length │
    │        Measurement Result]           │
    └────────────────────────────────────┘
                        │
                        ▼
    ┌────────────────────────────────────┐
    │   Sample First and Second Electric Signals │ ──S105
    │     φA, φB in Sync with Timing Signal Sg8 │
    └────────────────────────────────────┘
                        │
                        ▼
                    ( END )
```

FIG. 5

FIG. 6

## FIG. 7

Error in Length Measurement Value

1kHz

10⁰ 10¹ 10² 10³

Frequency (Hz)

## FIG. 8

Error in Length Measurement Value

1kHz

10⁻¹ 10⁰ 10¹ 10² 10³

Frequency (Hz)

# FIG. 9

Sampling Frequency fs/Modulation Frequency fm

# FIG. 10

E1; Phase Difference of 0°          E2; Phase Difference of 90°

## FIG. 11

Frequency Component of
Modulation Frequency fm
Contained in Displacement P

fm (Hz)    fm (Hz)

2·fm (Hz)    2·fm (Hz)

Timing Signal Sg8
(Sampling Frequency fs (fs = 2·fm))

F1; Phase Difference of 0°    F2; Phase Difference of 90°

## FIG. 12

Sampled at fs = 2·fm

Sampled at fs = 1·fm

Frequency Component of fm Contained in Displacement P

Phase Difference [degree]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001274495 A
- US 6396069 A
- US 4886363 A

**Non-patent literature cited in the description**

- **W.XUBAO et al.** The beam characteristic of Nd:YAG frequency doubling in a KTP crystal by the resonant external ring cavity. *Proceedings of SPIE,* 2005, vol. 5646